# FASCICULE DE BREVET EUROPEEN

(11) **EP 2 966 741 B1**
(45) Date de publication et mention de la délivrance du brevet: **28.09.2016**
(21) Numéro de dépôt: 15305875.5
(22) Date de dépôt: 09.06.2015
(51) Int. Cl.: H02G 3/18

(54) **SUPPORT D'APPAREILLAGE À MONTER DANS UNE BOÎTE D'ENCASTREMENT ET MÉCANISME D'APPAREILLAGE ÉLECTRIQUE ÉQUIPÉ D'UN TEL SUPPORT D'APPAREILLAGE**
Installationshalterung für Einbaudose und elektrische Geräte mit einer solchen Halterung
apparatus support to be mounted in a flush mounted box and electrical apparatus having such a support.

(30) Priorité: 07.07.2014 FR 1456539
(43) Date de publication de la demande: 13.01.2016
(73) Titulaire: Legrand France, 87000 Limoges (FR); Legrand SNC, 87000 Limoges (FR)
(72) Inventeur: Bonnet, Patricia, 87000 LIMOGES (FR)
(74) Mandataire: Orsini, Fabienne

(56) Documents cités:
- DE-U1-202012 101 320
- FR-A1- 3 000 310

## Description

La présente invention concerne le montage d'un appareillage électrique dans une paroi.

Elle concerne plus particulièrement un support d'appareillage à monter dans une boîte d'encastrement, ainsi qu'un mécanisme d'appareillage électrique équipé d'un tel support d'appareillage.

### ARRIERE-PLAN TECHNOLOGIQUE

Dans FR-A-3000310, afin de monter un appareillage électrique dans une paroi, une boîte d'encastrement est généralement fixée dans un évidement ménagé dans la paroi, puis un support d'appareillage est monté sur la boîte d'encastrement.

Le support d'appareillage porte un mécanisme d'appareillage, tel qu'un mécanisme d'interrupteur ou de prise électrique, qui se retrouve ainsi logé dans la boîte d'encastrement.

Le support d'appareillage est classiquement fixé sur la boîte d'encastrement au moyen de deux vis reçues dans des fûts respectivement prévus de manière diamétralement opposée sur la face interne de la paroi latérale de la boîte d'encastrement de telle sorte qu'une collerette du support d'appareillage est retenue par serrage entre la tête de chaque vis et des parties planes dédiées de la boîte d'encastrement.

La collerette du support d'appareillage présente usuellement des orifices en forme de trou de serrure avec, d'une part, une partie oblongue qui reçoit le fût fileté de chaque vis, cette partie oblongue s'étendant suivant un arrondi afin de permettre un rattrapage angulaire (grâce au déplacement du support d'appareillage permis par le coulissement des fûts filetés des vis dans les parties oblongues des orifices), et, d'autre part, une partie d'extrémité circulaire autorisant le passage de la tête de chaque vis.

Cette conception classique impose toutefois de superposer la tête de vis, la collerette du support d'appareillage et les parties planes de la boîte d'encastrement de sorte que l'on aboutit à des épaisseurs notables pour l'ensemble, du fait notamment que la collerette du support d'appareillage, munie de ses orifices, doit être d'une épaisseur suffisante pour résister à la pression lors du serrage des vis.

Du fait de cette épaisseur, l'appareillage électrique (et notamment la plaque de finition qui doit recouvrir la collerette et la tête de vis) forme une surépaisseur sur la paroi murale, ce qui va à l'encontre de la finesse généralement recherchée pour l'ensemble.

### OBJET DE L'INVENTION

Dans ce contexte, la présente invention propose un support d'appareillage à monter dans une boîte d'encastrement et comprenant une collerette pourvue d'une ouverture traversante (pour réception d'un élément de montage, par exemple une vis de montage), et destinée à coopérer avec une surface d'appui de la boîte d'encastrement, un logement avec un fond s'étendant en retrait par rapport à la collerette, et une plaquette délimitant au moins partiellement une partie évidée (destinée à être traversée elle aussi par l'élément de montage) et comprenant au moins une partie de contact avec le fond du logement, la plaquette étant montée dans le logement avec une possibilité de mouvement par glissement sur le fond du logement tout en maintenant ladite partie évidée en regard de ladite ouverture traversante.

La plaquette peut ainsi être plaquée contre le fond du logement au moyen de l'élément de montage positionné à travers l'ouverture traversante et la partie évidée (cet élément de montage étant typiquement une vis de montage vissée sur la boîte d'encastrement), ce qui permet l'assemblage du support d'appareillage et de la boîte d'encastrement. Toutefois, grâce à la possibilité de mouvement de la plaquette dans le logement, on peut effectuer un rattrapage angulaire du positionnement du support d'appareillage (par rapport à la boîte d'encastrement, c'est-à-dire par rapport à la paroi dans laquelle la boîte d'encastrement est fixée) en dévissant légèrement la vis de montage afin de libérer la contrainte exercée par la plaquette sur le fond du logement.

On remarque par ailleurs que la plaquette est reçue dans le logement en léger retrait par rapport à la collerette (du fait que le fond du logement s'étend lui-même en retrait) et que la tête de vis, qui vient s'appuyer sur la plaquette, ne dépasse donc pas de la collerette, ce qui permet d'obtenir un montage de faible épaisseur.

D'autres caractéristiques avantageuses et non limitatives du support d'appareillage conforme à l'invention sont les suivantes :
- la partie de contact comprend une région d'appui entourant la partie évidée et destinée à recevoir une tête de la vis de montage ;
- la plaquette comprend des moyens d'appui destinés à coopérer avec une collerette de la boîte d'encastrement, ladite collerette formant au moins par endroits ladite surface d'appui ;
- un bord libre du fond du logement présente un renfoncement pour le passage de la vis de montage ;
- la partie de contact comprend au moins un bord ayant une forme arrondie complémentaire de la forme d'une paroi incurvée du logement ;
- la plaquette est retenue entre le fond et une dent formée dans une paroi du logement.
- une nervure s'étendant entre la dent et le fond coopère avec une première encoche formée dans un bord de la plaquette ;
- la plaquette comporte une seconde encoche conçue pour être traversée par un ergot formé dans une paroi du logement lors du montage de la plaquette dans le logement ;
- le support d'appareillage comporte des moyens de réception d'un mécanisme d'appareillage.

L'invention propose également un ensemble comportant une boîte d'encastrement et un support d'appareillage tel que mentionné ci-dessus, le support d'appareillage étant monté dans la boîte d'encastrement au moyen de la vis de montage dont le fût fileté traverse ladite ouverture traversante et ladite partie évidée surperposées.

L'invention propose aussi un mécanisme d'appareillage électrique équipé d'un support d'appareillage tel que mentionné ci-dessus. Le support d'appareillage peut être réalisé d'une pièce avec certains des éléments du mécanisme d'appareillage ou assemblé avec le mécanisme d'appareillage par des moyens d'assemblage réciproque, comme décrit ci-après.

### DESCRIPTION DETAILLEE D'EXEMPLES DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en éclaté d'un ensemble dans lequel un appareillage électrique est monté dans une boîte d'encastrement selon un premier mode de réalisation de l'invention ;
- la figure 2 est une vue en coupe de l'ensemble de la figure 1 ;
- la figure 3 est une vue de face de l'ensemble de la figure 1 ;
- la figure 4 est une vue en perspective d'un support d'appareillage de l'appareillage électrique de la figure 1 ;
- la figure 5 est une vue de face du support d'appareillage de la figure 4;
- la figure 6 est une vue en perspective d'une plaquette destinée à être reçue dans un logement du support d'appareillage de la figure 4 ;
- les figures 7 et 8 représentent l'ensemble de la figure 1 dans deux positions angulaires relatives du support d'appareillage et de la boîte d'encastrement ;
- la figure 9 est une vue de face d'un ensemble du type de celui représenté sur la figure 1 selon un second mode de réalisation de l'invention ;
- la figure 10 est une vue en perspective de la plaquette de l'ensemble de la figure 9 ;
- la figure 11 est une vue en perspective d'une variante de réalisation de la plaquette utilisée conformément aux enseignements de l'invention ;
- la figure 12 est une vue en perspective d'un support d'appareillage réalisé selon un troisième mode de réalisation de l'invention ;
- la figure 13 est une vue en perspective d'une plaquette utilisée dans le troisième mode de réalisation ;
- la figure 14 est une vue de face du support d'appareillage de la figure 12 avec la plaquette de la figure 13 ;
- la figure 15 est une vue en perspective d'un support d'appareillage réalisé selon un quatrième mode de réalisation de l'invention ;
- la figure 16 est une vue de détail d'un logement du support d'appareillage de la figure 15 ;
- la figure 17 est une vue en perspective d'une plaquette utilisée dans le quatrième mode de réalisation.

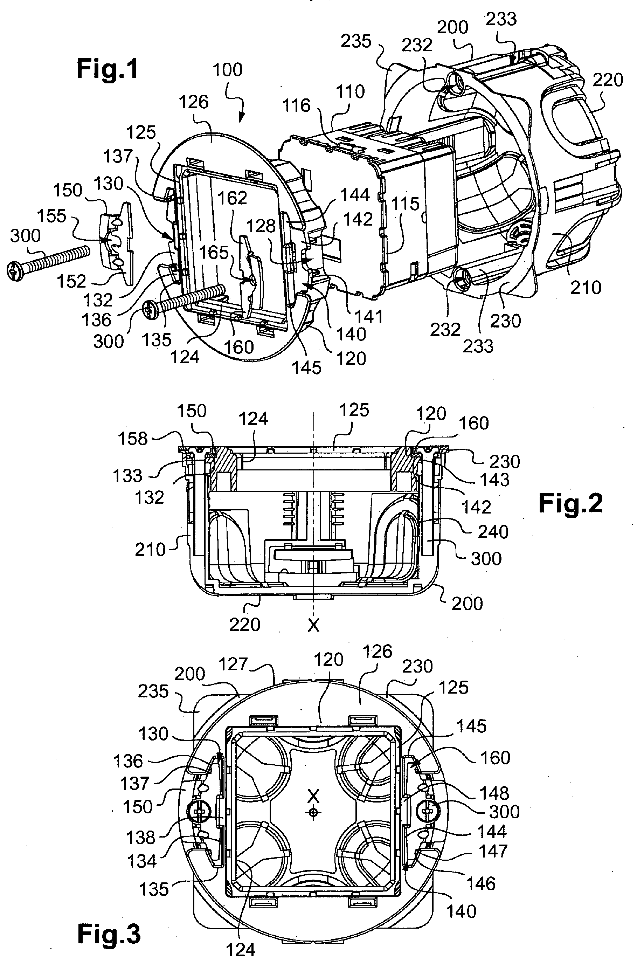

Sur les figures 1, 2, 3, 7, 8, 9, on a représenté un ensemble comportant un appareillage électrique 100 et une boîte d'encastrement 200, 500.

Comme visible sur la figure 1, l'appareillage électrique 100 comprend un mécanisme d'appareillage 110 et un support d'appareillage 120, 420, 720. Le mécanisme d'appareillage 110 et le support d'appareillage 120, 420, 720 comportent des moyens d'assemblage réciproque, ici des créneaux 115 (formant moyens de retenue avant), qui s'étendent à partir d'une face avant du mécanisme d'appareillage 110 et coopèrent avec des formes complémentaires 125, 425, 725 du support d'appareillage 120, 420, 720, et des dents d'encliquetage 116 (formant moyens de retenue arrière) prévues sur deux côtés opposés de la face externe de la paroi latérale d'un boîtier du mécanisme d'appareillage 110 et adaptées à s'accrocher sur la face arrière d'un bord interne 124, 424, 724 d'un cadre annulaire 122, 722 du support d'appareillage 120, 420, 720.

Dans la présente description, on considère le cas du montage de l'appareillage électrique dans une paroi verticale, par exemple une cloison sèche, et on désigne par "*avant*" la direction tournée vers l'intérieur de la pièce délimitée par cette paroi. Ainsi par exemple l'appareillage électrique 100 est monté à l'avant de la boîte d'encastrement 200.

De même, les termes "*supérieur*" et "*inférieur*" s'entendent en position montée dans l'exemple décrit, comme illustré sur les figures 1, 3, 4, 5, 7, 8, 9 et 14.

L'invention est toutefois applicable au montage d'un appareillage électrique dans d'autres positions, par exemple dans une paroi horizontale telle qu'un faux-plafond.

Comme visible sur les figures 1, 2, 3, 7, 8, 9 et 14, le support d'appareillage 120, 420, 720, qui porte le mécanisme d'appareillage 110, est monté sur la boîte d'encastrement 200, 500 au moyen de deux vis 300, 600, comme expliqué plus en détail ci-dessous.

Un enjoliveur (non représenté), parfois dénommé plaque de finition ou plaque de décor, est en général monté sur le support d'appareillage afin de recouvrir celui-ci et d'améliorer l'aspect esthétique de l'ensemble.

Comme déjà mentionné et bien visible sur les figures 1, 4, 12 et 15, le support d'appareillage 120, 420, 720, 820 comporte un cadre 122, 722, 822, ici de forme générale annulaire, dont un bord interne 124, 424, 724 (rectangulaire dans les modes de réalisation des figures 1 à 14) définit une ouverture de réception du mécanisme d'appareillage 110. Les formes complémentaires 125, 425, 725 (destinées à coopérer avec les créneaux 115 du mécanisme d'appareillage 110) sont ici formées dans la face avant du support d'appareillage 120, 420, 720, sur toute la périphérie du bord interne 124, 424, 724.

Le support d'appareillage 120, 420, 720, 820 comporte également une collerette 126, 426, 726, 826 qui s'étend vers l'extérieur à partir de régions avant du cadre 122, 722, 822, dans un plan perpendiculaire à la direction de montage de l'appareillage électrique 100 sur la boîte d'encastrement 200, 500 et sur plus de la moitié de la périphérie du cadre annulaire 122, 722, 822. La collerette 126, 426, 726, 826 présente un bord périphérique circulaire 127, 427, 727, 827 et on peut donc définir un axe central X orienté selon la direction de montage du support d'appareillage 120, 420, 720, 820 sur la boîte d'encastrement 200, 500 et qui passe par le centre du bord périphérique circulaire 127, 427, 727, 827 de la collerette 126, 426, 726, 826.

La collerette 126, 426, 726, 826 est interrompue dans deux régions diamétralement opposées (dans les modes de réalisation des figures 1 à 14 : au droit de deux côtés opposés du bord interne rectangulaire 124, 424, 724) de façon à ménager à chaque fois une ouverture traversante 128, 728, 828 et un logement 130, 140, 730, 740, 830, 840 pour une plaquette 150, 160, 450, 460, 750, 760, 860.

Chaque logement 130, 140, 730, 740, 830, 840 présente un fond plat 132, 142, 732, 742, 832 disposé en retrait (vers l'arrière) par rapport à la collerette 126, 426, 726, 826 (précisément, par rapport à la façade avant de la collerette 126, 426, 726, 826, qui forme également la façade avant du support d'appareillage 120, 420, 720, 820). Le fond 132, 142, 732, 742, 832 de chaque logement 130, 140, 730, 740, 830, 840 s'étend dans un plan substantiellement parallèle au plan général d'extension de la collerette 126, 426, 726, 826, soit substantiellement perpendiculaire à la direction de montage du support d'appareillage 120, 420, 720, 820 sur la boîte d'encastrement 200, 500.

Chaque logement 130, 140, 730, 740, 830, 840 est délimité vers l'intérieur du support d'appareillage 120, 420, 720, 820 (c'est-à-dire en direction de l'axe central X) par une paroi latérale 134, 144, 434, 444, 734, 744, 834, 844 perpendiculaire au fond 132, 142, 732, 742, 832 du logement concerné. La paroi latérale 134, 144, 434, 444, 734, 744, 834, 844 s'étend, dans les exemples des figures 1 à 14, parallèlement au côté du bord interne rectangulaire 124, 424, 724 qui jouxte le logement concerné. La face de la paroi latérale 134, 144, 434, 444, 734, 744 opposée à celle tournée vers le logement 130, 140, 730, 740 participe en outre (dans ces mêmes exemples représentés aux figures 1 à 14) à la formation des éléments complémentaires 125, 425, 725 (destinés à coopérer avec les créneaux 115 du mécanisme d'appareillage 110).

À chaque extrémité (inférieure et supérieure sur les figures 1, 3, 4, 5, 7, 8, 14 et 16) de la paroi latérale 134, 144, 434, 444, 734, 744, 834, 844, celle-ci se prolonge par une courte paroi horizontale 135, 145, 335, 345, 735, 745, 835, puis par une paroi légèrement incurvée 136, 146, 436, 446, 736, 746, 836 qui s'étend selon un arc de cercle en faisant face à la paroi latérale 134, 144, 434, 444, 734, 744,834.

Les parois incurvées 136, 146, 436, 446, 736, 746, 836 ne s'étendent toutefois que sur une partie de la longueur de la paroi latérale 134, 144, 434, 444, 734, 744, 834 qui leur fait face de sorte que le logement 130, 140, 730, 740, 830, 840 concerné est ouvert latéralement vers l'extérieur, au droit d'une partie centrale de la paroi latérale 134, 144, 434, 444, 734, 744, 834, 844, du fait de l'interruption susmentionnée de la collerette 126, 426, 726, 826.

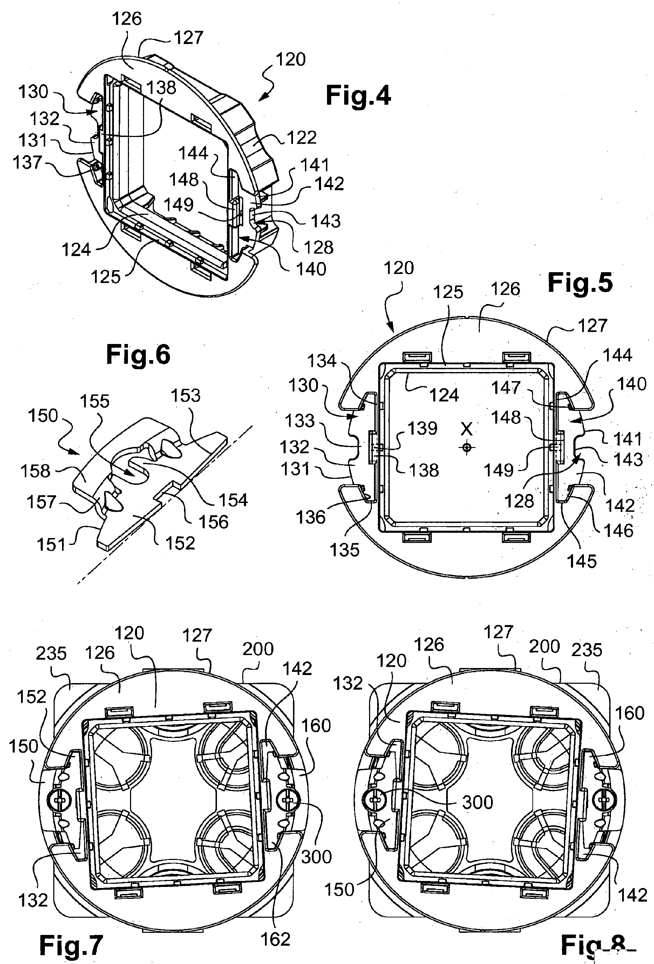

Comme visible en particulier sur les figures 4, 5, 12 et 15, le fond 132, 142, 732, 742, 832 du logement concerné présente donc à cet endroit un bord libre 131, 141, 731, 741, 831, qui s'étend avec un diamètre (par rapport à l'axe central X) inférieur au diamètre interne de la boîte d'encastrement 200, 500.

Dans le mode de réalisation décrit ici, comme visible en particulier en figure 2, le bord libre 131, 141, 731, 741, 831 présente un renfoncement 133, 143, 733, 743, 833 (qui forme donc un bord de l'ouverture traversante 128, 728, 828) pour le passage de la vis 300, 600 de montage du support d'appareillage 120, 420 sur la boîte d'encastrement 200, 500.

Chaque logement 130, 140, 730, 740, 830, 840 est par ailleurs ouvert vers l'avant (c'est-à-dire à l'opposé du fond 132, 142, 732, 742, 832 selon la direction de montage), sauf (en ce qui concerne les modes de réalisation des figures 1 à 14) au niveau d'une dent 138, 148, 438, 448, 738, 748, qui s'étend à partir de la partie centrale de la paroi latérale 134, 144, 434, 444, 734, 744, et d'un ergot 137, 147, 437, 447, 737, 747, qui s'étend à partir d'une région d'extrémité de la paroi incurvée 136, 146, 436, 446, 736, 746.

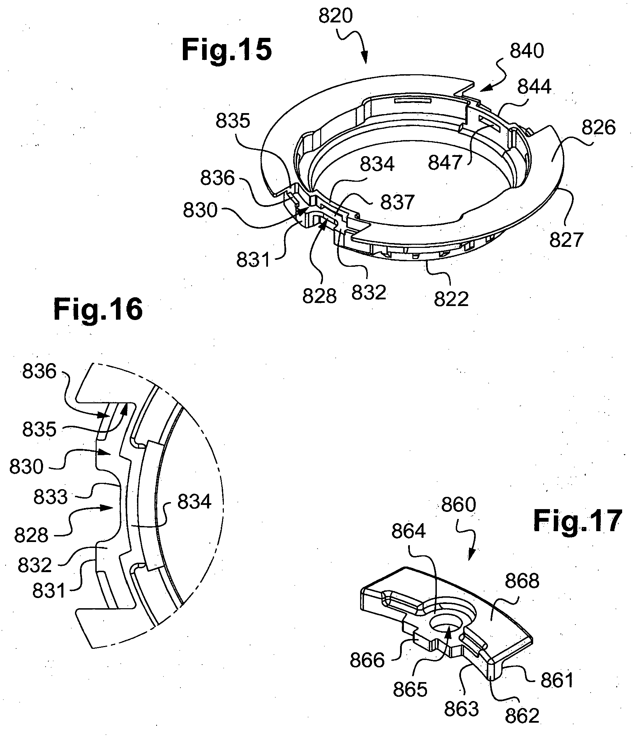

Dans le mode de réalisation des figures 15 à 17, la paroi latérale 834, 844 de chaque logement 830, 840 présente dans sa partie centrale une gorge 837, 847 réalisée de sorte que le fond 832 du logement concerné 830, 840 se prolonge légèrement à l'intérieur de cette gorge 837, 847.

Comme déjà indiqué, chaque logement 130, 140, 730, 740, 830, 840 est conçu pour recevoir une plaquette 150, 160, 450, 460, 750, 760, 860. Pour ce faire, chaque plaquette 150, 160, 450, 460, 750, 760, 860 comporte une partie de contact et de faible épaisseur 152, 162, 452, 752, 862 adaptée à être logée entre les parois qui délimitent le logement 130, 140, 730, 740, 830, 840 concerné, au contact du fond 132, 142, 732, 742, 832 du logement 130, 140, 730, 740, 830, 840 concerné. Dans les modes de réalisation des figures 1 à 14, la partie de contact 152, 162, 452, 752 est réalisée en forme de plaque plane.

Les dimensions de la partie de contact 152, 162, 452, 752, 862 sont même inférieures aux dimensions correspondantes du logement concerné 130, 140, 730, 740, 830, 840 de manière à ce que la plaquette 150, 160, 450, 460, 750, 760, 860 puisse se déplacer dans le logement concerné 130, 140, 730, 740, 830, 840 en glissant sur le fond 132, 142, 732, 742, 832 du logement concerné 130, 140, 730, 740, 830, 840.

Ici, la longueur de la partie de contact 152, 162, 452, 752, 862 (qui s'étend ici verticalement en position montée) est inférieure de quelques millimètres, par exemple inférieure de 4 mm à 6 mm, à la distance séparant les deux parois horizontales 135, 145, 435, 445, 735, 745, 835 d'un même logement 130, 140, 730, 740, 830, 840.

La partie de contact 152, 162, 452, 752, 862 présente un bord 151, 451, 751, 861 (ici le bord latéral tourné vers l'extérieur) ayant, au moins par endroits, une forme arrondie complémentaire de la forme d'une paroi délimitant le logement 130, 140, 730, 740, 830, 840 (ici la paroi incurvée 136, 146, 436, 446, 736, 746, 836) de façon à permettre un pivotement relatif du support d'appareillage 120, 420, 720, 820 et de la plaquette 150, 160, 450, 460, 750, 760, 860 autour de l'axe central X.

Par ailleurs, dans les modes de réalisation des figures 1 à 14, comme illustré au moyen d'un trait en pointillés en figure 6, le bord latéral 153, 453, 753 de la partie plane de contact 152, 452, 752 tourné vers l'intérieur du support d'appareillage 120, 420, 720 (c'est-à-dire vers la paroi latérale 134, 434, 734) est légèrement incliné vers le haut et vers le bas, à partir d'une région centrale de la partie plane 152, 452, 752, afin d'être situé à une distance croissante de la paroi latérale 134, 434, 734 à mesure que l'on s'éloigne de la région centrale. Ceci permet à la partie plane de contact 152, 452, 752 de se déplacer librement dans le logement 130, 430, 730 entre les deux positions extrêmes représentées sur les figures 7 et 8, sans que le bord latéral 153, 453, 753 vienne en butée sur la paroi latérale 134, 434, 734.

La partie de contact 152, 162, 452, 752, 862 comprend également une région d'appui 154, 454, 754, 864 destinée à recevoir la tête de l'une des vis de montage 300, 600 et entourant pour ce faire (partiellement pour les premier et second modes de réalisation représentés sur les figures 1 à 10) une partie évidée 155, 455, 755, 865 traversée, en position montée, par la vis de montage concernée 300, 600 et, pour ce faire, située en regard de l'ouverture traversante 128, 728, 828 quelle que soit la position de la plaquette 150, 160, 450, 460, 750, 760, 860 dans le logement 130, 140, 730, 740, 830, 840.

Dans les modes de réalisation des figures 1 à 14, la dent 138, 148, 438, 448, 738, 748, formée à partir de la paroi latérale 134, 144, 434, 444, 734, 744 comme mentionné plus haut, ne s'étend pas sur toute la profondeur du logement 130, 140, 730, 740 concerné, mais ménage au contraire, entre la face arrière de la dent 138, 148, 438, 448, 738, 748 et le fond 132, 142, 732, 742 du logement, un espace dont la dimension correspond à l'épaisseur de la partie plane de contact 152, 162, 452, 752 de sorte que cette partie plane de contact 152, 162, 452, 752 puisse être engagée entre la dent 138, 148, 438, 448, 738, 748 et le fond 132, 142, 732, 742, ce qui permet de retenir la plaquette 150, 160, 450, 460, 750, 760 dans le logement 130, 140, 730, 740.

De même, l'ergot 137, 147, 437, 447, 737, 747, formé à partir de la paroi incurvée 136, 146, 436, 446, 736, 746 comme mentionné plus haut, ne s'étend pas sur toute la profondeur du logement 130, 140, 730, 740 concerné, mais ménage au contraire, entre la face arrière de l'ergot 137, 147, 437, 447, 737, 747 et le fond 132, 142, 732, 742 du logement, un espace dont la dimension correspond à l'épaisseur de la partie plane de contact 152, 162, 452, 752 de sorte que cette partie plane de contact 152, 162, 452, 752 puisse être engagée entre le plot 137, 147,437, 447, 737, 747 et le fond 132, 142, 732, 742, ce qui permet d'améliorer encore la retenue de la plaquette 150, 160, 450, 460, 750, 760 dans le logement 130, 140, 730, 740.

On prévoit en outre dans l'exemple décrit ici, afin de limiter les possibilités de mouvement de la plaquette 150, 160, 450, 460, 750, 760 dans le logement 130, 140, 730, 740 à celles effectivement souhaitées (en particulier afin de limiter verticalement les déplacements possibles de la plaquette 150, 160, 450, 460, 750, 760), qu'une nervure 139, 149, 739, 749 s'étende dans l'espace ménagé entre la dent 138, 148, 748 et le fond 132, 142, 742 pour coopérer avec une première encoche 156, 456, 756 formée par le bord latéral 153, 453, 753 de la partie plane 152, 452, 752 de la plaquette 150, 450, 750.

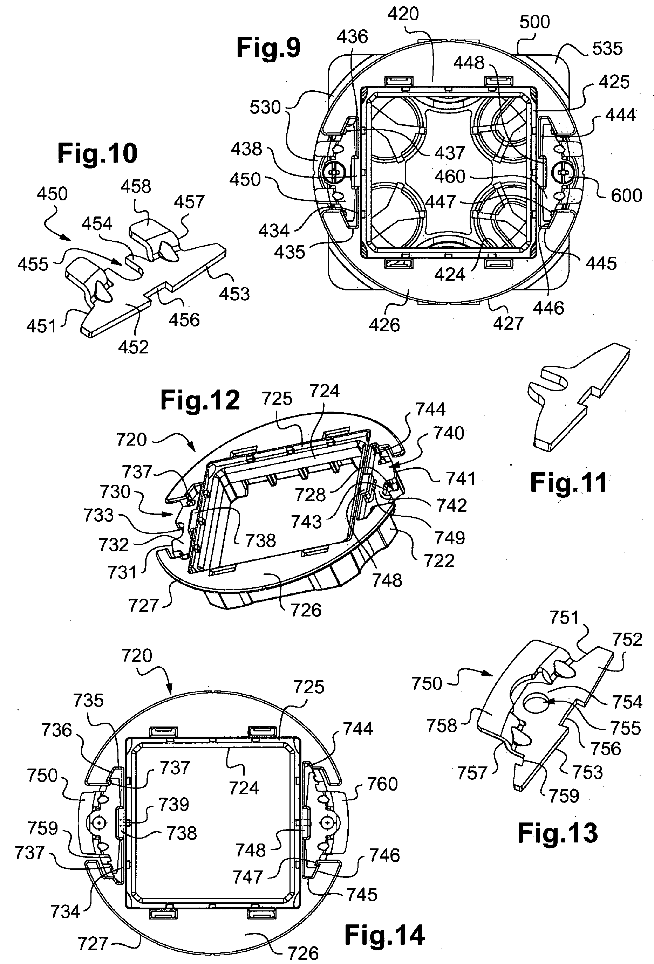

Dans le troisième mode de réalisation, comme bien visible en figure 13, le bord extérieur 751 présente une seconde encoche 759 de dimensions légèrement supérieures à celles de l'ergot 737 formé dans la partie de la paroi incurvée 736 destinée à faire face à la seconde encoche 759 lorsque la plaquette 750 est montée dans le logement 730.

Pour le montage de la plaquette 750 dans le logement 730, on présente la plaquette 750 légèrement inclinée, le bord latéral 753 de la partie plane de contact 752 pénétrant en premier dans le logement 730 de manière à venir placer l'encoche 756 entre la dent 738 et le fond 732 ; la nervure 739 fait alors face à une partie supérieure de la première encoche 756.

La plaquette 750 est en outre positionnée à ce moment de sorte que la seconde encoche 759 soit située au droit de l'un des deux ergots 737, la plaquette 750 étant dimensionnée de sorte que son extrémité supérieure n'interfère pas (dans cette position particulière) avec l'autre ergot 737.

La plaquette 750 peut ainsi pivoter librement autour d'un axe vertical (correspondant à peu près à la paroi latérale 734) jusqu'à ce que l'ensemble de la partie plane de contact 752 soit au contact du fond 732. La plaquette 750 est alors légèrement déplacée vers le haut de sorte que le bord extérieur 751 se retrouve retenu en deux endroits entre un ergot 737 et le fond 732 : la plaquette 750 est montée dans le logement 730.

La seconde encoche 759 permet ainsi de faciliter le montage de la plaquette 750 dans le logement 730. On peut toutefois utiliser en variante d'autres moyens pour permettre le passage de la partie plane sous l'ergot, par exemple une élasticité adaptée de l'ergot.

Dans le quatrième mode de réalisation représenté sur les figures 15 à 17, le bord latéral 863 tourné vers l'intérieur du support d'appareillage 820 présente un ergot 866 qui coopère avec la gorge 837, 847 prévue comme déjà indiqué dans la paroi latérale 834, 844 afin d'assurer la retenue de la plaquette 860 dans le logement correspondant 830, 840.

Dans la plupart des modes de réalisation décrits ici, la plaquette 150, 450, 750, 860 comporte par ailleurs des moyens d'appui 158, 458, 758, 868 sur la boite d'encastrement 200, 500. On pourrait toutefois prévoir en variante que la plaquette ne comprenne pas ces moyens d'appui et se limite donc à la partie plane et de faible épaisseur, comme représenté en figure 11.

Dans les premier, troisième et quatrième modes de réalisation (représentés aux figures 1 à 8 et 12 à 17), comme bien visible sur les figures 6, 13 et 17, les moyens d'appui sont formés par une bretelle 158, 758, 868 reliée à la partie de contact 152, 752, 862, par exemple par deux bras 157, 757 dans le cas des premier et troisième modes de réalisation (figures 6 et 13). La face arrière de la bretelle 158, 758, destinée à venir en appui sur la boîte d'encastrement 200 comme expliqué plus loin, est située à l'avant de la face avant de la partie plane 152, 752.

Dans le second mode de réalisation (illustré sur les figures 9 et 10), les moyens d'appui sont formés par des régions d'extrémité planes 458 formées respectivement à l'extrémité de deux bras 457 issus de la partie plane 452. La face arrière des régions d'extrémité planes est située à l'avant de la face avant de la partie plane 452 et est destinée à venir en appui sur la boîte d'encastrement 500, comme expliqué plus loin.

Comme visible en figure 1, la boîte d'encastrement 200, 500 comporte une paroi latérale cylindrique 210 ; la boîte d'encastrement 200, 500 est ouverte à l'avant pour recevoir l'appareillage électrique 100 et fermée à l'arrière par un fond 220.

La boîte d'encastrement 200, 500 comporte également une collerette 230, 530 qui s'étend vers l'extérieur à partir du bord avant de la paroi latérale cylindrique 210, ici sur toute la périphérie de la boîte d'encastrement 200, 500. La collerette 230, 530 est prolongée vers l'extérieur par des oreilles 235, 535 en plusieurs endroits (ici quatre endroits) de la périphérie de la boîte d'encastrement 200,500.

Par ailleurs, en deux endroits de sa périphérie (ici en haut et en bas), la collerette 230, 530 est traversée par un trou 232 qui débouche dans une cheminée 233 qui s'étend vers l'arrière et est adaptée pour recevoir une vis de montage (non représentée) de la boîte d'encastrement 200, 500 dans la cloison où doit être monté l'appareillage électrique 100.

La boîte d'encastrement 200, 500 comporte enfin deux fûts 240 (situés ici de part et d'autre de la boîte d'encastrement 200, 500 dans un plan horizontal médian) destinés chacun à recevoir l'une des vis de montage 300, 600 du support d'appareillage 120, 420, 720 sur la boîte d'encastrement 200, 500.

On remarque ici que la boîte d'encastrement 500 utilisée dans le second mode de réalisation et la boîte d'encastrement (non représentée) utilisée dans le troisième mode de réalisation ou le quatrième mode de réalisation sont identiques à celle du premier mode de réalisation, visible notamment en figure 1.

Le support d'appareillage 120, 420, 720, 820 (hormis les plaquettes 150, 160, 450, 460, 750, 760, 860) et la boîte d'encastrement 200, 500 sont réalisés en matière plastique. Les plaquettes 150, 160, 450, 460, 750, 760 sont par exemple réalisées en acier embouti ou en Zamac.

Pour l'assemblage du support d'appareillage 120, 420, 720, 820 et de la boîte d'encastrement 200, 500, la collerette 126, 426, 726, 826 du support d'appareillage 120, 420, 720, 820 est placée au contact de la collerette 230, 530 de la boîte d'encastrement 200, 500 et chaque vis de montage 300, 600 est positionnée à travers une des ouvertures traversantes 128, 728, 828 formées dans la collerette 126, 426, 726, 826 et la partie évidée 155, 455, 755, 865 formée dans la plaquette 150, 450, 750, 860 correspondante.

On procède alors au serrage des vis 300, 600 (par coopération du filetage de la vis 300, 600 concernée et du taraudage du fût 240 correspondant) jusqu'à ce que la tête de chacune des vis 300, 600 vienne en appui sur la région d'appui 154, 454, 754, 864 de la plaquette 150, 450, 750, 860 correspondante.

Le support d'appareillage 120, 420, 720, 820 est ainsi retenu (par pincement) entre les plaquettes 150, 450, 750, 860 (en appui sur le fond 132, 142, 732, 742, 832 des logements 130, 140, 730, 740, 830, 840) et la boîte d'encastrement 200, 500 (par appui de la collerette 126, 426, 726, 826 du support d'appareillage 120, 420, 720, 820 sur la collerette 230, 530 de la boîte d'encastrement 200, 500).

On remarque que la tête de la vis de montage 300, 600 est alors elle-même reçue dans le logement 130, 140, 730, 740, 830, 840, comme bien visible en figure 2 et ne dépasse donc pas du support d'appareillage 120, 420, 720, 820 vers l'avant ; l'enjoliveur à monter à l'avant du support d'appareillage 120, 420, 720, 820 peut ainsi avoir une épaisseur réduite, ce qui peut être avantageux sur le plan esthétique.

Dans l'exemple décrit ici, comme visible sur les figures 2, 3, 7, 8, 9, les moyens d'appui 158, 458, 758, 868 formés sur les plaquettes 150, 160, 450, 460, 750, 760, 860 viennent en outre au contact de la collerette 230, 530 de la boîte d'encastrement 200, 500, ce qui améliore encore la solidarisation de l'ensemble.

Comme illustré sur les figures 7 et 8 qui représentent deux positions angulaires extrêmes entre le support d'appareillage 120 et la boîte d'encastrement 200, le positionnement angulaire du support d'appareillage 120, 420, 720, 820 par rapport à la boîte d'encastrement 200, 500 (autour de l'axe central X) peut être corrigé (par exemple afin que les bords internes 124, 424, 724 soient respectivement horizontaux et verticaux et que l'enjoliveur à monter sur le support d'appareillage 120, 420, 720 soit donc "*droit*") en dévissant légèrement les vis de montage 300, 600, en utilisant les possibilités de mouvement des plaquettes 150, 160, 450, 460, 750, 760, 860 dans les logements correspondants 130, 140, 730, 740, 830, 840 (comme expliqué ci-dessus) pour obtenir l'alignement désiré, puis en serrant à nouveau les vis de montage 300, 600.

## Revendications

1. Support d'appareillage (120 ; 420 ; 720 ; 820) à monter dans une boîte d'encastrement (200 ; 500) et comprenant :
- une collerette (126; 426; 726; 826) pourvue d'une ouverture traversante (128 ; 728 ; 828), et destinée à coopérer avec une surface d'appui (230 ; 530) de la boîte d'encastrement (200 ; 500) ;
- un logement (130 ; 140 ; 730 ; 740 ; 830 ; 840) avec un fond (132 ; 142 ; 732 ; 742 ; 832) s'étendant en retrait par rapport à la collerette (126 ; 426 ;
726; 826); **caractérisé en ce que** le support (120; 420; 720; 820) comprend une plaquette (150 ; 160 ; 450 ; 460 ; 750 ; 760 ; 860) délimitant au moins partiellement une partie évidée (155 ; 165 ; 455 ; 755 ; 865) et comprenant au moins une partie (152 ; 162 ; 452 ; 752 ; 862) de contact avec le fond (132 ; 142 ; 732 ; 742, 832) du logement (130 ; 140 ; 730 ; 740 ; 830 ; 840), la plaquette (150 ; 160 ; 450 ; 460 ; 750 ; 760 ; 860) étant montée dans le logement (130 ; 140 ; 730 ; 740 ; 830 ; 840) avec une possibilité de mouvement par glissement sur le fond (132 ; 142 ; 732 ; 742 ; 832) du logement (130 ; 140 ; 730 ; 740 ; 830 ; 840) tout en maintenant ladite partie évidée (155 ; 165 ; 455 ; 755 ; 865) en regard de ladite ouverture traversante (128 ; 728 ; 828).

2. Support d'appareillage selon la revendication 1, dans lequel la partie de contact (152 ; 162 ; 452 ; 752 ; 862) comprend une région d'appui (154 ; 454 ; 754 ; 864) entourant la partie évidée (155 ; 165 ; 455 ; 755 ; 865) et destinée à recevoir une tête d'une vis de montage (300 ; 600).

3. Support d'appareillage selon la revendication 1 ou 2, dans lequel la plaquette (150 ; 160 ; 450 ; 460 ; 750 ; 760 ; 860) comprend des moyens d'appui (158 ; 458 ; 758 ; 868) destinés à coopérer avec une collerette (230 ; 530) de la boîte d'encastrement (200 ; 500), ladite collerette (230 ; 530) formant au moins par endroits ladite surface d'appui.

4. Support d'appareillage selon l'une des revendications 1 à 3, dans lequel un bord libre (131 ; 141 ; 731 ; 741 ; 831) du fond (132 ; 142 ; 732 ; 742 ; 832) du logement (130 ; 140 ; 730 ; 740 ; 830 ; 840) présente un renfoncement (133; 143; 733; 743; 833).

5. Support d'appareillage selon l'une des revendications 1 à 4, dans lequel la partie de contact (152 ; 162 ; 452 ; 752 ; 862) comprend au moins un bord (151 ; 451 ; 751 ; 861) ayant une forme arrondie complémentaire de la forme d'une paroi incurvée (136 ; 146 ; 736 ; 746 ; 836) du logement (130 ; 140 ; 730 ; 740 ; 830 ; 840).

6. Support d'appareillage selon l'une des revendications 1 à 5, dans lequel la plaquette (150 ; 160 ; 450 ; 460 ; 750 ; 760) est retenue entre le fond (132 ; 142 ; 732 ; 742) et une dent (138 ; 148 ; 438 ; 448 ; 738 ; 748) formée dans une paroi (134 ; 144 ; 434 ; 444 ; 734 ; 744) du logement (130 ; 140 ; 730 ; 740).

7. Support d'appareillage selon la revendication 6, dans lequel une nervure (139 ; 149 ; 739 ; 749) s'étendant entre la dent (138 ; 148 ; 438 ; 448 ; 738 ; 748) et le fond (132 ; 142 ; 732 ; 742) coopère avec une première encoche (156 ; 456 ; 756) formée dans un bord (153 ; 453 ; 753) de la plaquette (150 ; 160 ; 450 ; 460 ; 750 ; 760).

8. Support d'appareillage selon l'une des revendications 1 à 7, dans lequel la plaquette (750 ; 760) comporte une seconde encoche (759) conçue pour être traversée par un ergot (737) formé dans une paroi (736) du logement (730) lors du montage de la plaquette (750 ; 760) dans le logement (730 ; 740).

9. Support d'appareillage selon l'une des revendications 1 à 5, dans lequel la plaquette (860) comporte un ergot (866) qui coopère avec une gorge (834 ; 844) formée dans une paroi (834 ; 844) du logement (830 ; 840).

10. Support d'appareillage selon l'une des revendications 1 à 9, comportant des moyens de réception (124, 125; 424, 425; 724, 725) d'un mécanisme d'appareillage (110).

11. Mécanisme d'appareillage électrique équipé d'un support d'appareillage (120 ; 420 ; 720 ; 820) selon l'une des revendications 1 à 10.

## Patentansprüche

1. Installationshalterung (120; 420; 720; 820), die in einer Einbaudose (200; 500) zu montieren ist und
- einen mit einer Durchgangsöffnung (128; 728; 828) versehenen Halterungskranz (126; 426; 726; 826), der dazu bestimmt ist, mit einer Andruckoberfläche (230; 530) der Einbaudose (200; 500) zusammenzuwirken,
- einen Aufnahmeraum (130; 140; 730; 740; 830; 840) mit einem sich gegenüber dem Halterungskranz (126; 426; 726; 826) zurückgesetzt erstreckenden Boden (132; 142; 732; 742; 832) aufweist,
**dadurch gekennzeichnet, daß** die Halterung (120; 420; 720; 820) eine Platte (150; 160; 450; 460; 750; 760; 860) aufweist, die wenigstens teilweise einen ausgeschnittenen Abschnitt (155; 165; 455; 755; 865) umgrenzt und wenigstens einen Abschnitt (152; 162; 452; 752; 862) für einen Kontakt mit dem Boden (132; 142; 732; 742; 832) des Aufnahmeraums (130; 140; 730; 740; 830; 840) aufweist, wobei die Platte (150; 160; 450; 460; 750; 760; 860) in dem Aufnahmeraum (130; 140; 730; 740; 830; 840) mit der Möglichkeit einer Bewegung durch Gleiten auf dem Boden (132; 142; 732; 742; 832) des Aufnahmeraums (130; 140; 730; 740; 830; 840) unter gleichzeitigem Halten des besagten ausgeschnittenen Abschnitts (155; 165; 455; 755; 865) gegenüber der Durchgangsöffnung (128; 728; 828) montiert ist.

2. Installationshalterung gemäß Anspruch 1, bei der der Kontaktabschnitt (152; 162; 452; 752; 862) eine Auflagezone (154; 454; 754; 864) aufweist, die den ausgeschnittenen Abschnitt (155; 165; 455; 755; 865) umgibt und dazu bestimmt ist, den Kopf einer Montageschraube (300; 600) aufzunehmen.

3. Installationshalterung gemäß Anspruch 1 oder 2, bei der die Platte (150; 160; 450; 460; 750; 760; 860) Andruckmittel (158; 458; 758; 868) aufweist, die dazu bestimmt sind, mit einem Kranz (230; 530) der Einbaudose (200; 500) zusammenzuwirken, wobei der Kranz (230; 530) wenigstens stellenweise die besagte Andruckoberfläche bildet.

4. Installationshalterung gemäß einem der Ansprüche 1 bis 3, bei der ein freier Rand (131; 141; 731; 741; 831) des Bodens (132; 142; 732; 742; 832) des Aufnahmeraums (130; 140; 730; 740; 830; 840) eine Aussparung (133; 143; 733; 743; 833) aufweist.

5. Installationshalterung gemäß einem der Ansprüche 1 bis 4, bei der der Kontaktabschnitt (152; 162; 452; 752; 862) wenigstens einen Rand (151; 451; 751; 861) aufweist, der eine zur Form einer gebogenen Wandung (136; 146; 736; 746; 836) des Aufnahmeraums (130; 140; 730; 740; 830; 840) komplementäre abgerundete Form aufweist.

6. Installationshalterung gemäß einem der Ansprüche 1 bis 5, bei der die Platte (150; 160; 450; 460; 750; 760) zwischen dem Boden (132; 142; 732; 742) und einem in einer Wandung (134; 144; 434; 444; 734; 744) des Aufnahmeraums (130; 140; 730; 740) ausgebildeten Zahn (138; 148; 438; 448; 738; 748) zurückgehalten ist.

7. Installationshalterung gemäß Anspruch 6, bei der ein sich zwischen dem Zahn (138; 148; 438; 448; 738; 748) und dem Boden (132; 142; 732; 742) erstreckender Falz (139; 149; 739; 749) mit einer in einem Rand (153; 453; 753) der Platte (150; 160; 450; 460; 750; 760) ausgebildeten ersten Einkerbung (156; 456; 756) zusammenwirkt.

8. Installationshalterung gemäß einem der Ansprüche 1 bis 7, bei der die Platte (750; 760) eine zweite Einkerbung (759) aufweist, die dazu ausgebildet ist, bei der Montage der Platte (750; 760) im Aufnahmeraum (730; 740) von einer in einer Wandung (736) des Aufnahmeraums (730) ausgebildeten Nase (866) durchdrungen zu werden.

9. Installationshalterung gemäß einem der Ansprüche 1 bis 5, bei der die Platte (860) eine Nase (866) aufweist, die mit einer in einer Wandung (834; 844) des Aufnahmeraums (830; 840) ausgebildeten Hohlkehle (834; 844) zusammenwirkt.

10. Installationshalterung gemäß einem der Ansprüche 1 bis 9, die Mittel (124, 125; 424, 425; 724, 725) zum Aufnehmen eines Geräts (110) aufweist.

11. Elektrisches Gerät, das mit einer Installationshalterung (120; 420; 720; 820) gemäß einem der Ansprüche 1 bis 10 ausgestattet ist.

## Claims

1. An accessory support (120; 420; 720; 820) for mounting in a flush-mounted box (200; 500) and comprising:
• a flange (126; 426; 726; 826) that is provided with a through opening (128; 728; 828), and that is for co-operating with a bearing surface (230; 530) of the flush-mounted box (200; 500); and
• a housing (130; 140; 730; 740; 830; 840) with a bottom wall (132; 142; 732; 742; 832) that is set back relative to the flange (126; 426; 726; 826);
**characterised in that** the support (120; 420; 720; 820) comprises a plate (150; 160; 450; 460; 750; 760; 860) that defines, at least in part, a hollowed portion (155; 165; 455; 755; 865), and that includes at least one contact portion (152; 162; 452; 752; 862) for coming into contact with the bottom wall (132; 142; 732; 742, 832) of the housing (130; 140; 730; 740; 830; 840), the plate (150; 160; 450; 460; 750; 760; 860) being mounted in the housing (130; 140; 730; 740; 830; 840) with a possibility of movement by sliding over the bottom wall (132; 142; 732; 742; 832) of the housing (130; 140; 730; 740; 830; 840) while holding said hollowed portion (155; 165; 455; 755; 865) facing said through opening (128; 728; 828).

2. An accessory support according to claim 1, wherein the contact portion (152; 162; 452; 752; 862) includes a bearing region (154; 454; 754; 864) that surrounds the hollowed portion (155; 165; 455; 755; 865) and that is for receiving a head of a mounting screw (300; 600).

3. An accessory support according to claim 1 or claim 2, wherein the plate (150; 160; 450; 460; 750; 760; 860) includes bearing means (158; 458; 758; 868) for co-operating with a flange (230; 530) of the flush-mounted box (200; 500), said flange (230; 530) forming said bearing surface at least in some parts.

4. An accessory support according to any one of claims 1 to 3, wherein a free edge (131; 141; 731; 741; 831) of the bottom wall (132; 142; 732; 742; 832) of the housing (130; 140; 730; 740; 830; 840) presents a recess (133; 143; 733; 743; 833).

5. An accessory support according to any one of claims 1 to 4, wherein the contact portion (152; 162; 452; 752; 862) includes at least one edge (151; 451; 751; 861) having a rounded shape that is complementary to the shape of a curved wall (136; 146; 736; 746; 836) of the housing (130; 140; 730; 740; 830; 840).

6. An accessory support according to any one of claims 1 to 5, wherein the plate (150; 160; 450; 460; 750; 760) is held between the bottom wall (132; 142; 732; 742) and a catch (138; 148; 438; 448; 738; 748) that is formed in a wall (134; 144; 434; 444; 734; 744) of the housing (130; 140; 730; 740).

7. An accessory support according to claim 6, wherein a spline (139; 149; 739; 749) that extends between the catch (138; 148; 438; 448; 738; 748) and the bottom wall (132; 142; 732; 742) co-operates with a first notch (156; 456; 756) that is formed in an edge (153; 453; 753) of the plate (150; 160; 450; 460; 750; 760).

8. An accessory support according to any one of claims 1 to 7, wherein the plate (750; 760) includes a second notch (759) designed to allow a lug (737) formed in a wall (736) of the housing (730) to pass therethrough while the plate (750; 760) is being mounted in the housing (730; 740).

9. An accessory support according to any one of claims 1 to 5, wherein the plate (860) includes a lug (866) that co-operates with a channel (834; 844) that is formed in a wall (834; 844) of the housing (830; 840).

10. An accessory support according to any one of claims 1 to 9, including reception means (124, 125; 424, 425; 724, 725) for receiving an accessory mechanism (110).

11. An electrical accessory mechanism fitted with an accessory support (120; 420; 720; 820) according to any one of claims 1 to 10.
